# EUROPÄISCHE PATENTANMELDUNG

(11) **EP 1 277 533 A1**
(43) Veröffentlichungstag der Anmeldung: **22.01.2003**
(21) Anmeldenummer: 02012287.5
(22) Anmeldetag: 05.06.2002
(51) Int. Cl.: B23B 31/12, B23G 1/52

(54) **Spannvorrichtung für die rotatorische Bearbeitung von Werkstücken**

(30) Priorität: 20.07.2001 DE 10135456
(71) Anmelder: Rothenberger Werkzeuge Aktiengesellschaft, 65779 Kelkheim / Ts. (DE)
(72) Erfinder: Hofmann, Klaus, 85567 Pienzenau (DE); Dr. Judis, Michael, 97839 Esselbach (DE)
(74) Vertreter: Zapfe, Hans, Dipl.-Ing.

(57) **Zusammenfassung**

Bei einer Spannvorrichtung für die rotatorische Bearbeitung von Werkstücken (15) mit einer Hohlwelle, die eine Hohlwellenachse besitzt und um achsparallele Gelenkzapfen (12) schwenkbare Spannbacken (13) trägt, die in bezug auf die Gelenkzapfen (12) als doppelarmige Hebel ausgebildet sind, deren eine Enden (13b) mittels Greifflächen (13c) an die Werkstücke (15) anlegbar sind und deren andere Enden (13a) mittels eines angetriebenen und zur Hohlwellenachse (A-A) koaxialen und um diese begrenzt drehbaren Drehkranzes (8) um die Gelenkzapfen (12) schwenkbar sind, ist der Hohlwelle (9) eine Bremseinrichtung (22) zugeordnet. Um bei geringem Bauaufwand eine gleichmäßige Kraftverstärkung durch die Bearbeitungskräfte in beiden Drehrichtungen zu ermöglichen, sind die Spannbacken (13) spiegelsymmetrisch zu eigenen Symmetrieebenen ausgebildet, die durch die Achsen der Gelenkzapfen (12) verlaufen, und ferner sind die Spannbacken (13) in bezug auf eine durch diese Achsen verlaufende Radiallinie nach Maßgabe der Drehrichtung des Drehkranzes (8) nach beiden Seiten verschwenkbar. Die Spannvorrichung kann dabei sowohl für die Außenspannung als auch für die Innenspannung von Werkstücken ausgelegt sein.

## Beschreibung

Die Erfindung betrifft eine Spannvorrichtung für die rotatorische Bearbeitung von Werkstücken mit einer Hohlwelle, die eine Hohlwellenachse besitzt und um achsparallele Gelenkzapfen schwenkbare Spannbacken trägt, die in bezug auf die Gelenkzapfen als doppelarmige Hebel ausgebildet sind, deren eine Enden mittels Greifflächen an die Werkstücke anlegbar sind und deren andere Enden mittels eines angetriebenen und zur Hohlwellenachse koaxialen und um diese begrenzt drehbaren Drehkranzes um die Gelenkzapfen schwenkbar sind, wobei der Hohlwelle eine Bremseinrichtung zugeordnet ist.

Durch die Literaturstelle aus "HÜTTE - DES INGENIEURS TASCHENBUCH", 28. Auflage, 1954, Verlag Wilhelm Ernst & Sohn, Seiten 1092/1093, ist es bekannt, Spannwerkzeuge von Werkzeugmaschinen für schwere Werkstücke so auszubilden, daß die Spannung durch den Schnittdruck einer spanabhebenden Bearbeitung fester wird und daß die Spannkraft auch dann erhalten bleibt, wenn das Werkstück sich verformt. Bei einem abgebildeten Spannwerkzeug dieser Art läßt die asymmetrische Ausbildung der Spannbacken darauf schließen, daß diese nur in einer Drehrichtung wirksam werden können, nicht aber im Gegensinne, wie dies bei Gewindeschneidmaschinen wünschenswert ist. Soweit Bremsbacken dargestellt und beschrieben sind, die auf dem Umfang alternierend mit den Spannbacken angeordnet sind, dienen diese zur Verhinderung eines Weiterdrehens des schweren Werkstücks, wenn die Drehspindel abgebremst wird. Dadurch wird der Außendurchmesser der Spannvorrichtung erheblich vergrößert. Die Drehspindel hat keinen Durchgang für langgestreckte Werkstücke wie z.B. Rohre, und es ist nicht offenbart, wie das Anlegen der Spannbacken an das Werkstück, das erst eine Kraftverstärkung bewirkt, eingeleitet wird.

Durch die EP 0 318 419 B1 und die EP 0 444 380 B1 sind Spannvorrichtungen der eingangs beschriebenen Gattung bekannt, bei denen der über eine Kette angetriebene Drehkranz auf Spannbacken einwirkt, die als Winkelhebel ausgebildet sind. Einer der Hebelarme trägt eine Verzahnung für die Mitnahme des runden Werkstücks, der andere, sehr viel längere Hebelarm eine bogenförmige Kulisse, in die ein achsparalleler zapfenförmiger Kulissenstein eingreift. Ein Spannvorgang erfolgt immer nur in einer Drehrichtung, bei Umkehr der Drehrichtung können die Spannbacken nur geöffnet werden. Der Spannvorgang ist von Kräfte verzehrenden Reibungsvorgängen begleitet, und die langen Hebelarme ragen beim Anlauf der Vorrichtung und/oder bei großen Werkstückdurchmessern sehr weit über den Radius des Drehkranzes nach außen, so daß eine erhebliche Verletzungsgefahr für die Bedienungsperson gegeben ist.

Um das Werkstück zu zentrieren, besitzen die Spannbacken bei der Spannvorrichtung nach der EP 0 318 419 B1 dritte Hebelarme. Bei der Spannvorrichtung nach der EP 0 444 380 B1, die speziell für die Bearbeitung empfindlicher Rohre aus Kunststoff oder mit Kunststoffbeschichtungen vorgesehen ist, sind ebenfalls lange Winkelhebel mit bogenförmigen Kulissen vorgesehen, an denen die Spannbacken, die jeweils zwei mit Krallen versehene Zylinderzapfen tragen, gelenkig befestigt sind. Zur Zentrierung der Rohre sind an den Spannbacken zusätzliche Laschen mit bogenförmigen Kulissen vorhanden, die den Gelenkzapfen des in Drehrichtung jeweils nächsten Winkelhebels längsverschiebbar umgreifen.

In beiden Fällen sind am jeweils anderen Ende der Spannvorrichtung gleichfalls Spannbacken gleicher Art angeordnet, auf die die Bewegung der ersten Spannbacken durch Torsionsstäbe übertragen werden muß, die die Hohlwelle auf der gesamten Länge äquidistant umgeben. Um die Elastizität der Torsionsstäbe zu kompensieren, müssen bestimmte Winkeleinstellungen an beiden Enden der Torsionsstäbe vorgenommen werden. Der Bau- und Montageaufwand ist also beträchtlich.

Zwar erfolgt in diesen beiden Fällen eine Synchronisation der Bewegungen der Spannbacken durch den Drehkranz, jedoch ist diese einseitig: Die bogenförmigen Kulissen in den Winkelhebeln verlaufen nämlich an jedem Punkt ihre Länge unter einem spitzen Winkel zum Teilkreis der Kulissensteine, so daß die Spannbacken wegen der dadurch bedingten Selbsthemmung selbst nichts zur Synchronisation ihrer Bewegungen nach Zeit, Kraft und Raumlage beitragen können. Diese einseitige Synchronisation ist daher erheblich durch Toleranzen und elastische Verformungen in den zahlreichen Führungen beeinträchtigt. Die jeweils nicht unmittelbar durch den Drehkranz gesteuerten Spannbacken haben keine selbstzentrierende Wirkung.

Der Erfindung liegt demgegenüber die Aufgabe zugrunde, eine Spannvorrichtung der eingangs beschriebenen Gattung anzugeben, mit der eine Kraftverstärkung durch die Bearbeitungskräfte in beiden Drehrichtungen möglich ist und bei der die Spannbacken zunächst mit vorgegebenen ersten Klemmkräften an das Werkstück angelegt werden, worauf diese Klemmkräfte durch die Bearbeitungskräfte an allen Spannbacken gleichzeitig und gleichmäßig vergrößert werden. Außerdem soll die Spannvorrichtung möglichst einfach und leicht aufgebaut sein, d.h. aus möglichst wenigen Teilen bestehen und kleinstmögliche Toleranzen besitzen.

Die Lösung der gestellten Aufgabe erfolgt erfindungsgemäß dadurch, daß die Spannbacken spiegelsymmetrisch zu eigenen Symmetrieebenen ausgebildet sind, die durch die Achsen der Gelenkzapfen verlaufen, und daß sie in bezug auf eine durch diese Achsen verlaufende Radiallinie nach Maßgabe der Drehrichtung des Drehkranzes nach beiden Seiten verschwenkbar sind.

Es ist dabei im Zuge weiterer Ausgestaltungen der Erfindung besonders vorteilhaft, wenn - entweder einzeln oder in Kombination - :
* der Drehkranz auf seiner den Spannbacken abgekehrten Seite eine Verzahnung für den Eingriff eines Ritzels einer Antriebseinrichtung besitzt,
* die Spannbacken im Innern des Drehkranzes angeordnet sind und wenn dieser auf seiner den Spannbacken zugekehrten Innenseite in Abständen radiale Ausnehmungen für den Eingriff der den Greifflächen abgekehrten Enden der Spannbacken besitzt,
* die den Greifflächen abgekehrten Enden der Spannbacken durch Teilzylinderflächen mit einem Umfangswinkel von mehr als 180 Grad, vorzugsweise von mindestens 270 Grad, begrenzt sind,
* die Spannbacken im Innern des Drehkranzes angeordnet sind, wenn der Drehkranz auf seiner den Spannbacken zugekehrten Innenseite mit einer Verzahnung versehen ist, und wenn die den Greifflächen abgekehrten Enden der Spannbacken mit je einer zu den Gelenkzapfen konzentrischen Teilverzahnung versehen sind, die in die Verzahnung des Drehkranzes eingreift,
* die Spannbacken außerhalb des Drehkranzes angeordnet sind, wenn der Drehkranz auf seiner den Spannbacken zugekehrten Außenseite mit einer Verzahnung versehen ist, und wenn die den Greifflächen abgekehrten Enden der Spannbacken mit je einer zu den Gelenkzapfen konzentrischen Teilverzahnung versehen sind, die in die Verzahnung des Drehkranzes eingreift,
* die die Greifflächen tragenden Enden der Spannbacken in axialer Richtung gesehen entweder spitzbogenförmig oder parabelförmig ausgebildet sind,
* die die Greifflächen tragenden Enden der Spannbacken eine griffige Oberflächenstruktur aufweisen,
* die dem Werkstück zugekehrten Enden der Spannbacken auf beiden Seiten mit profilierten Greifflächen für das Werkstück versehen sind,
* das Ritzel durch ein Schneckengetriebe und einen Elektromotor antreibbar ist, dessen Motorachse zumindest im wesentlichen parallel zu einer Ebene ausgerichtet ist, die senkrecht zur Hohlwellenachse verläuft,
* die mindestens eine Spannvorrichtung und der Elektromotor innerhalb der Hüllfläche eines gemeinsamen Gehäuse untergebracht sind, und/oder, wenn
* das Gehäuse aus zwei Gehäuseteilen besteht, in denen auf gegenüber liegenden Seiten die Drehkränze und die Spannbacken versenkt angeordnet sind.

Drei Ausführungsbeispiele des Erfindungsgegenstandes und deren Wirkungsweisen werden nachfolgend anhand der Figuren 1 bis 7 näher erläutert.

Es zeigen:
- Figur 1: eine Frontansicht eines ersten Ausführungsbeispiels in Richtung der Rotationsachse bei geöffnetem Gehäuse,
- Figur 2: einen Axialschnitt durch den Gegenstand von Figur 1,
- Figur 3: einen Ausschnitt aus Figur 1 in vergrößertem Maßstab mit einer Einstellung der Spannbacken für eine Rechtsdrehung des Werkstücks,
- Figur 4: eine analoge Darstellung der Figur 3, jedoch mit einer Einstellung der Spannbacken für eine Linksdrehung des Werkstücks,
- Figur 5: eine perspektivische Darstellung des Gegenstandes nach den Figuren 1 und 2 anhand eines Schnittes durch das geschlossene Gehäuse,
- Figur 6: eine perspektivische Darstellung eines zweiten Ausführungsbeispiels analog Figur 5, jedoch mit einem abgenommenem Gehäuseteil und
- Figur 7: eine Frontansicht eines dritten Ausführungsbeispiels in Richtung der Rotationsachse ohne Gehäuse für eine Innenspannung eines größeren Werkstücks in Form einer Prinzipdarstellung.

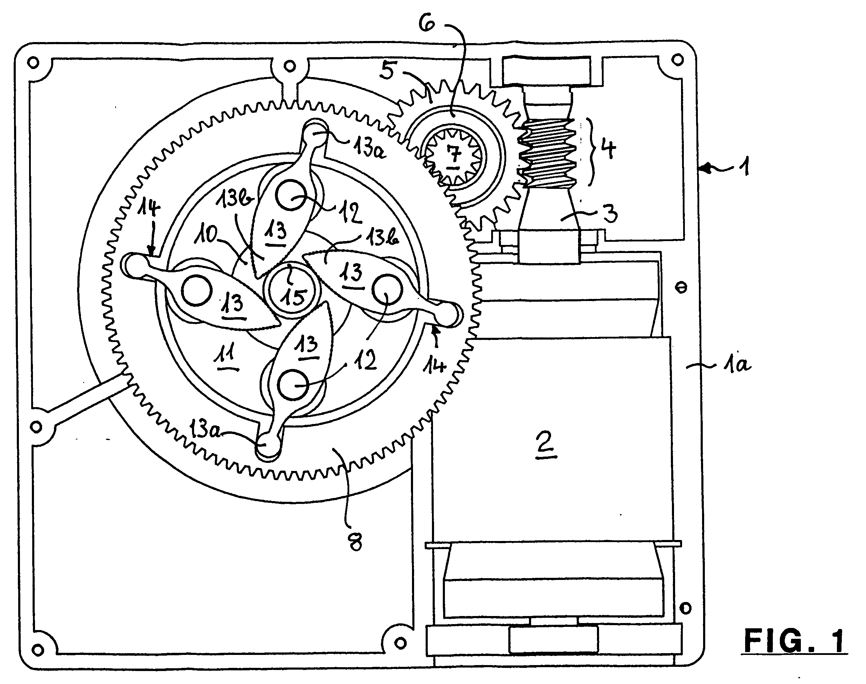

In Figur 1 ist ein etwa quaderförmiges Gehäuse 1 dargestellt, von dem nur das hintere Gehäuseteil 1a gezeigt ist. In dem Gehäuse ist ein Elektromotor 2 mit einer Motorwelle 3 untergebracht, die eine Getriebeschnecke 4 trägt. Diese wirkt auf ein Schneckenrad 5 ein, dessen Welle 6 ein wiederum kleineres Ritzel 7 trägt, das mit der Außenverzahnung 8a eines Drehkranzes 8 kämmt.

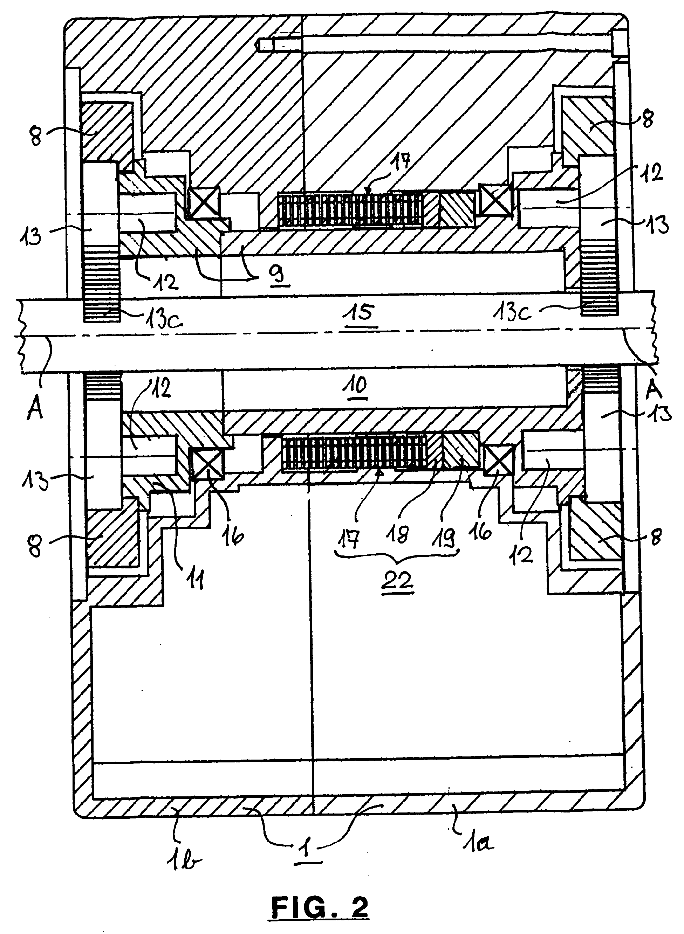

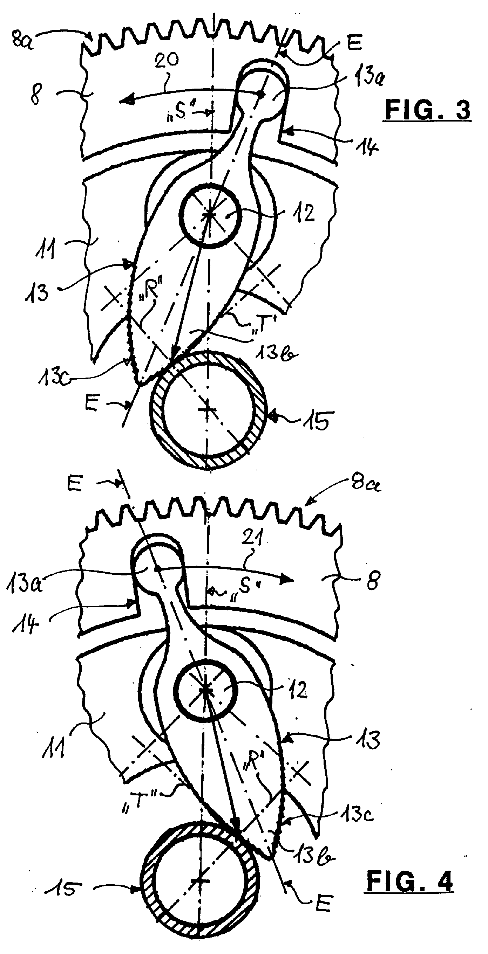

Der Drehkranz 8 ist gegenüber einer zweiteiligen und zusammen gesteckten Hohlwelle 9 (Figur 2) begrenzt verdrehbar, von der hier nur die Wellenbohrung 10 sichtbar ist. Die Hohlwelle 9 besitzt eine Hohlwellenachse A-A und einen radialen Ringflansch 11, auf dem der Drehkranz 8 gelagert ist und in dem in äquidistanter Verteilung vier achsparallele Gelenkzapfen 12 befestigt sind. Diese tragen je eine Spannbacke 13, die als doppelarmiger Hebel ausgebildet ist. Weitere Einzelheiten werden anhand der Figuren 3 und 4 noch näher erläutert.

Der Drehkranz 8 besitzt, gleichfalls in äquidistanter Verteilung, vier radiale Ausnehmungen 14, in die die äußeren Enden 13a der Spannbacken 13 eingreifen. Die inneren Enden 13b zentrieren und tragen ein rundes Werkstück 15, das ein Rohr ist, auf dessen Außenseite ein Gewinde geschnitten werden soll. Der - an sich bekannte - Schneidkopf ist der Einfachheit halber nicht dargestellt.

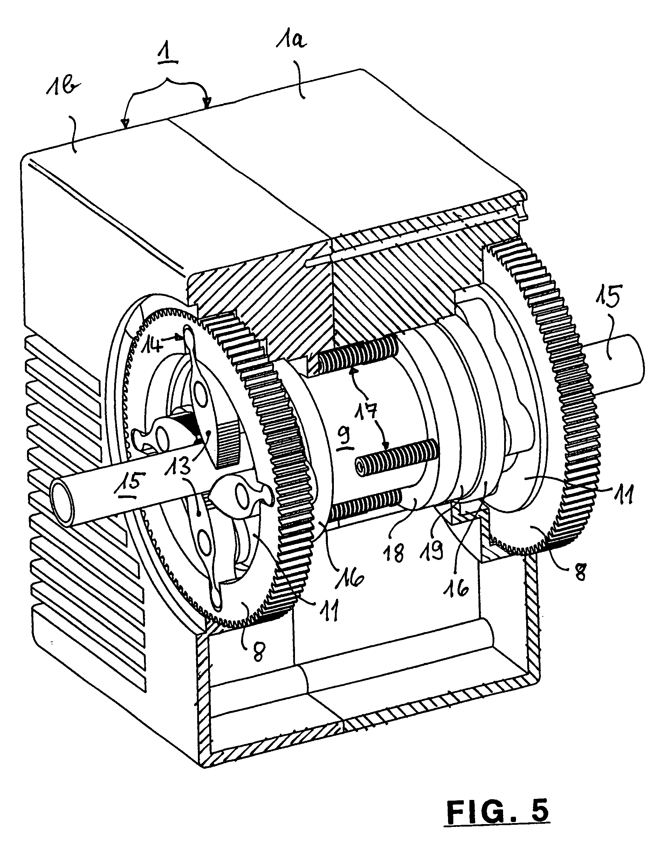

Die Figuren 2 und 5 zeigen zusätzlich das vordere Gehäuseteil 1b, das kongruent und dicht auf das hintere Gehäuseteil 1a aufgesetzt und mit diesem verspannt ist. Die Hohlwelle 9 ist in dem Gehäuse 1 mittels zweier Wälzlager 16 gelagert und in äquidistanter Verteilung von einem Satz vorgespannter achsparalleler Druckfedern 17 umgeben (siehe insbesondere Figur 5). Diese Druckfedern 17 wirken auf zwei ringförmige Reibbeläge 18 und 19 ein, von denen der Reibbelag 18 mit den Druckfedern 17 verdrehfest im Gehäuseteil 1a gelagert ist und der Reibbelag 19 sich mit der Hohlwelle 9 dreht. Dadurch wird eine Bremseinrichtung 22 mit genau vorgegebenen Bremskraft gebildet, so daß der nach dem Einschalten kurzzeitig voreilende Drehkranz 8 die Hohlwelle 9 gegen diese Bremskraft "mitschleppt". Die Anordnung der Spannbacken 13 im Gehäuseteil 1b nach Figur 1 wiederholt sich in spiegelsymmetrischer Anordnung auf der gegenüber liegenden Seiten im Gehäuseteil 1a.

Die Figuren 3 und 4 erläutern nun das Wirkungsprinzpip dieses Mechanismus: Die Spannbacken 13 sind spiegelsymmetrisch zu ihrer Symmetrieebene E-E ausgebildet. Die äußeren Enden 13a der Spannbacken 13 sind auf dem größten Teil ihres Umfangs von einer Teilzylinderfläche begrenzt, die genau in die jeweilige Ausnehmung 14 hineinpaßt. Die inneren Enden sind im Querschnitt spitzbogenförmig ausgebildet und tragen im Bereich möglicher Berührungen mit Werkstücken 15 unterschiedlichen Durchmessers auf beiden Seiten Greifflächen 13c mit feinen Verzahnungen nach Art von Sägezähnen.

Wird nun gemäß Figur 3 der Drehkranz 8 in Richtung des Pfeils 20 entgegen dem Uhrzeigersinne verdreht, wobei der Gelenkzapfen 12 zunächst unter der Wirkung der Reibbeläge 18 und 19 festgehalten wird, so wird das Werkstück zunächst zentriert, und anschließend wird das Ende 13b der Spannbacke 13 stärker gegen das Werkstück 15 gepreßt und nimmt dieses mit gleicher Drehrichtung mit. Sobald am Werkstück 15 Schneidkräfte auftreten, verstärkt sich automatisch der Anpreßdruck der Spannbacke 13. Es wird ein Kräfteprallelogramm gebildet, das durch strichpunktierte Linien angedeutet ist, und zwar entstehen eine Radialkraft "R" und eine Tangentialkraft "T". Mit der Einstellung nach den Figuren 1 und 3 wird beispielsweise ein Rechtsgewinde geschnitten. Wenn ein automatischer Schneidkopf verwendet wird, dessen Schneidbacken sich nach Fertigstellung des Gewindes selbsttätig öffnen, so kann das Werkstück 15 nach Stillsetzung des Motors 2 sofort entnommen werden.

Figur 4 zeigt nun, daß die gleiche Vorrichtung auch für die Herstellung eines Linksgewindes verwendet werden kann, wenn man die Drehrichtung des Motors 2 und damit auch die Drehrichtung des Drehkranzes 8 im Sinne des Pfeils 21 umkehrt. Diese Wirkung ist darauf zurückzuführen, daß die Symmetrieebene E-E der Spannbacken nach beiden Seiten einer durch die Achse des jeweiligen Gelenkzapfens 12 verlaufenden Radiallinie "S" verschwenkt werden kann.

Von besonderer Bedeutung ist aber, daß der Drehkranz 8 nicht nur die Bewegungen aller Spannbacken 13 synchronisiert und damit auch eine Zentrierung des Werkstücks 15 bewirkt, sondern daß auch umgekehrt die Enden 13a der Spannbacken 13 über den Drehkranz 8 synchronisierend aufeinander einwirken, was insbesondere den Synchronisationseffekt und die Zentrierung beim Schließen der Spannbacken 13 fördert. Dies ist dadurch möglich, daß die Enden 13a der Spannbacken 13 ohne Selbsthemmung in tangentialer Richtung auf den Drehkranz 8 einwirken.

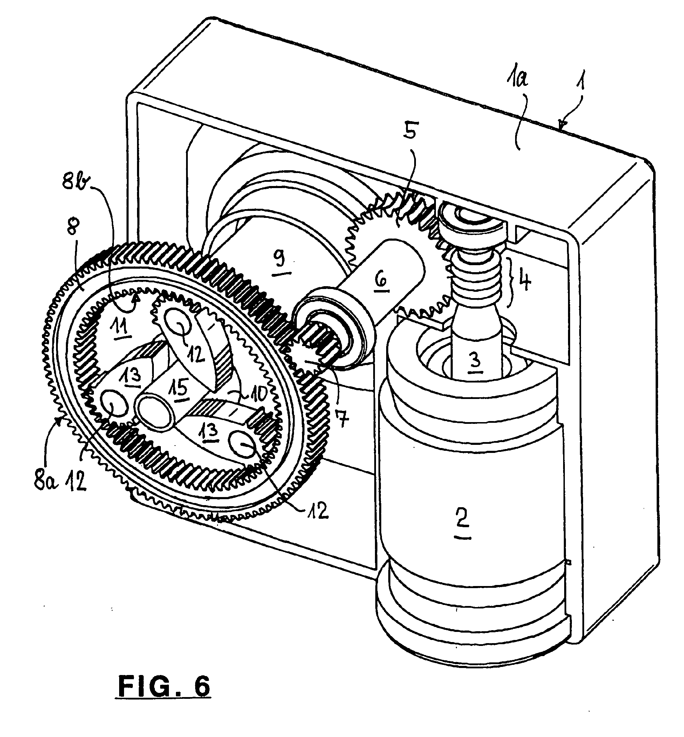

Figur 6 unterscheidet sich im wesentlichen dadurch von der bisher beschriebenen Ausführungsform, daß der Drehkranz 8 außer einer Außenverzahnung 8a auch eine Innenverzahnung 8b besitzt. Die äußeren Enden der drei Spannbacken 13 sind daher mit einer entsprechenden Außenverzahnung versehen, die einen Sektor eines Ritzels darstellt, dessen Achse mit der Achse des jeweiligen Gelenkzapfens 12 zusammenfällt. Die Wirkungsweise läßt sich durch die Figuren 3 und 4 in analoger Weise erklären.

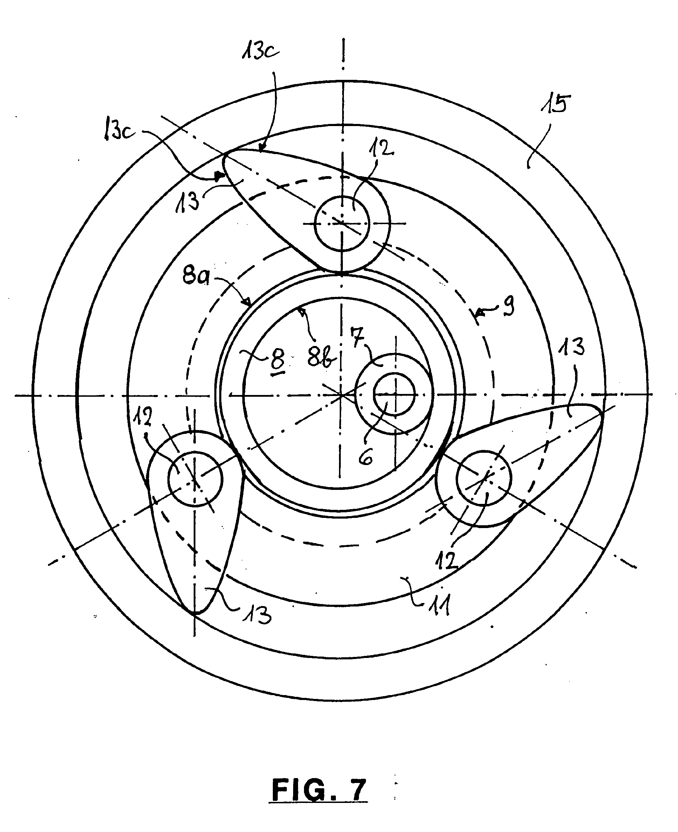

Figur 7 unterscheidet sich im wesentlichen dadurch von den bisher beschriebenen Ausführungsformen, daß die Spannvorrichtung diesmal innerhalb eines Werkstücks 15, eines Ringes, liegt, der bearbeitet werden soll. Auch in diesem Falle besitzt der Drehkranz 8 außer einer Außenverzahnung 8a auch eine Innenverzahnung 8b, mit der jetzt das Ritzel 7 kämmt. Diesmal sind die inneren Enden der drei Spannbacken 13 mit einer entsprechenden Außenverzahnung versehen, die einen Sektor eines Ritzels darstellt, dessen Achse mit der Achse des jeweiligen Gelenkzapfens 12 zusammenfällt. Die Wirkungsweise läßt sich auch in diesem Fall durch die Figuren 3 und 4 in analoger Weise erklären. Die Verzahnungen sind in diesem Falle nicht besonders dargestellt.

In allen Fällen sind die Spannvorrichtungen versenkt innerhalb der Stirnseiten der Gehäuse 1 bzw. der Gehäuseteile 1a und 1b angeordnet, so daß keine Verletzungsgefahr durch abstehende und rotierende Antriebsteile gegeben ist. Die gesamten Anordnungen sind extrem platzsparend gebaut und lassen sich mit beliebigen Schneidköpfen oder anderen Werkzeughaltern kombinieren.

### Bezugszeichenliste:

- 1: Gehäuse
- 1a: Gehäuseteil
- 1 b: Gehäuseteil
- 2: Elektromotor
- 3: Motorwelle
- 4: Getriebeschnecke
- 5: Schneckenrad
- 6: Welle
- 7: Ritzel
- 8: Drehkranz
- 8a: Außenverzahnung
- 8b: Innenverzahnung
- 9: Hohlwelle
- 10: Wellenbohrung
- 11: Ringflansch
- 12: Gelenkzapfen
- 13: Spannbacke
- 13a: äußere Enden
- 13b: innere Enden
- 13c: Greifflächen
- 14: Ausnehmungen
- 15: Werkstück
- 16: Wälzlager
- 17: Druckfedern
- 18: Reibbelag
- 19: Reibbelag
- 20: Pfeil
- 21: Pfeil
- 22: Bremseinrichtung
- A-A: Hohlwellenachse
- E-E: Symmetrieebene
- "R": Radialkraft
- "S": Radiallinie
- "T": Tangentialkraft

## Patentansprüche

1. Spannvorrichtung für die rotatorische Bearbeitung von Werkstücken (15) mit einer Hohlwelle (9), die eine Hohlwellenachse (A-A) besitzt und um achsparallele Gelenkzapfen (12) schwenkbare Spannbacken (13) trägt, die in bezug auf die Gelenkzapfen (12) als doppelarmige Hebel ausgebildet sind, deren eine Enden (13b) mittels Greifflächen (13c) an die Werkstücke (15) anlegbar sind und deren andere Enden (13a) mittels eines angetriebenen und zur Hohlwellenachse (A-A) koaxialen und um diese begrenzt drehbaren Drehkranzes (8) um die Gelenkzapfen (12) schwenkbar sind, wobei der Hohlwelle (9) eine Bremseinrichtung (22) zugeordnet ist, **dadurch gekennzeichnet, daß** die Spannbacken (13) spiegelsymmetrisch zu eigenen Symmetrieebenen (E-E) ausgebildet sind, die durch die Achsen der Gelenkzapfen (12) verlaufen, und daß sie in bezug auf eine durch diese Achsen verlaufende Radiallinie ("S") nach Maßgabe der Drehrichtung des Drehkranzes (8) nach beiden Seiten verschwenkbar sind.

2. Spannvorrichtung nach Anspruch 1, **dadurch gekennzeichnet, daß** der Drehkranz (8) auf seiner den Spannbacken (13) abgekehrten Seite eine Verzahnung (8a) für den Eingriff eines Ritzels (7) einer Antriebseinrichtung besitzt.

3. Spannvorrichtung nach Anspruch 1, **dadurch gekennzeichnet, daß** die Spannbacken (13) im Innern des Drehkranzes (8) angeordnet sind und daß dieser auf seiner den Spannbacken (13) zugekehrten Innenseite in Abständen radiale Ausnehmungen (14) für den Eingriff der den Greifflächen (13c) abgekehrten Enden (13a) der Spannbacken (13) besitzt.

4. Spannvorrichtung nach Anspruch 3, **dadurch gekennzeichnet, daß** die den Greifflächen (13c) abgekehrten Enden (13a) der Spannbacken (13) durch Teilzylinderflächen mit einem Umfangswinkel von mehr als 180 Grad, vorzugsweise von mindestens 270 Grad, begrenzt sind.

5. Spannvorrichtung nach Anspruch 1, **dadurch gekennzeichnet, daß** die Spannbacken (13) im Innern des Drehkranzes (8) angeordnet sind, daß der Drehkranz (8) auf seiner den Spannbacken (13) zugekehrten Innenseite mit einer Verzahnung (8b) versehen ist, und daß die den Greifflächen (13c) abgekehrten Enden der Spannbacken (13) mit je einer zu den Gelenkzapfen (12) konzentrischen Teilverzahnung versehen sind, die in die Verzahnung (8b) des Drehkranzes (8) eingreift.

6. Spannvorrichtung nach Anspruch 1, **dadurch gekennzeichnet, daß** die Spannbacken (13) außerhalb des Drehkranzes (8) angeordnet sind, daß der Drehkranz (8) auf seiner den Spannbacken (13) zugekehrten Außenseite mit einer Verzahnung (8a) versehen ist, und daß die den Greifflächen (13c) abgekehrten Enden der Spannbacken (13) mit je einer zu den Gelenkzapfen (12) konzentrischen Teilverzahnung versehen sind, die in die Verzahnung (8a) des Drehkranzes (8) eingreift.

7. Spannvorrichtung nach Anspruch 1, **dadurch gekennzeichnet, daß** die die Greifflächen (13c) tragenden Enden der Spannbacken (13) - in axialer Richtung gesehen - spitzbogenförmig ausgebildet sind

8. Spannvorrichtung nach Anspruch 1, **dadurch gekennzeichnet, daß** die die Greifflächen (13c) tragenden Enden der Spannbacken (13) - in axialer Richtung gesehen - parabelförmig ausgebildet sind

9. Spannvorrichtung nach Anspruch 1, **dadurch gekennzeichnet, daß** die die Greifflächen (13c) tragenden Enden der Spannbacken (13) eine griffige Oberflächenstruktur aufweisen.

10. Spannvorrichtung nach Anspruch 1, **dadurch gekennzeichnet, daß** die dem Werkstück (15) zugekehrten Enden (13b) der Spannbacken (13) auf beiden Seiten mit profilierten Greifflächen (13c) für das Werkstück (15) versehen sind.

11. Spannvorrichtung nach Anspruch 2, **dadurch gekennzeichnet, daß** das Ritzel (7) durch ein Schneckengetriebe (4, 5) und einen Elektromotor (2) antreibbar ist, dessen Motorachse zumindest im wesentlichen parallel zu einer Ebene ausgerichtet ist, die senkrecht zur Hohlwellenachse (A-A) verläuft.

12. Spannvorrichtung nach Anspruch 1, **dadurch gekennzeichnet, daß** die mindestens eine Spannvorrichtung und der Elektromotor (2) innerhalb der Hüllfläche eines gemeinsamen Gehäuse (1) untergebracht sind.

13. Spannvorrichtung nach Anspruch 12, **dadurch gekennzeichnet, daß** das Gehäuse (1) aus zwei Gehäuseteilen (1a, 1b) besteht, in denen auf gegenüberliegenden Seiten die Drehkränze (8) und die Spannbacken (13) versenkt angeordnet sind.

14. Verwendung der Spannvorrichtung nach mindestens einem der Ansprüche 1 bis 13 für Gewindeschneidmaschinen.
